Europäisches Patentamt

European Patent Office

Office européen des brevets

(11) Veröffentlichungsnummer: **0 200 894**

**A2**

(12) ## EUROPÄISCHE PATENTANMELDUNG

(21) Anmeldenummer: **86103598.8**

(22) Anmeldetag: **17.03.86**

(51) Int. Cl.⁴: **B01D 53/04**

(30) Priorität: **30.03.85 DE 3511766**

(43) Veröffentlichungstag der Anmeldung:
**17.12.86 Patentblatt 86/46**

(84) Benannte Vertragsstaaten:
**AT BE CH DE FR GB IT LI LU NL SE**

(71) Anmelder: **Hugo Petersen Ges. für
verfahrenstechn. Anlagenbau mbH & Co KG
Dantestrasse 4-6
D-6200 Wiesbaden 1(DE)**

(72) Erfinder: **Kotsch, Herbert
Wildhofer Strasse 21
D-6056 Heusenstamm(DE)**
Erfinder: **Gernot, Krauss
Aunelstrasse 65
D-6200 Wiesbaden-Dotzheim(DE)**

(74) Vertreter: **Carstens, Wilhelm, Dipl.-Phys.
L. & C. Steinmüller GmbH Patentabteilung
Postfach 10 08 55/10 08 65
D-5270 Gummersbach 1(DE)**

(54) **Verfahren zur Desorption eines mit Schadstoffen beladenen Adsorptionsmittels u. Anlage zur Durchführung des Verfahrens.**

(57) Bei einem Verfahren zur Desorption eines mit Schadstoffen beladenen körnigen kohlenstoffhaltigen Adsorptionsmittels, insbesondere mit Schwefeloxiden und/oder Stickstoffoxiden aus Rauchgasen beladenen Aktivkokses, durch Erwärmung des Adsorptionsmittels auf Desorptionstemperatur, Sammeln der desorbierten gasförmigen Schadstoffe und anschließendem Kühlen, ist erfindungsgemäß vorgesehen, daß die Erwärmung durch Beaufschlagung der Adsorptionsmittelkörner mittels einer Strahlung erfolgt, die von den Körnern direkt absorbiert wird.

Fig. 1.

EP 0 200 894 A2

Verfahren zur Desorption eines mit Schadstoffen beladenen Adsorptionsmittels und Anlage zur Durchführung des Verfahrens

Die Erfindung betrifft zunächst ein Verfahren der im Oberbegriff des vorstehenden Anspruches 1 genannten Art.

Es ist ein Verfahren bekannt (BMFT-FB-T-81-147), bei dem ein Röhrendesorber zur Regeneration von Aktivkoks benutzt wird, der in einer Rauchgasentschwefelungsanlage mit Schadstoffen beladen wurde. Im Desorber wird der Aktivkoks durch Erhitzung auf Temperaturen zwischen 305-500° C regeneriert. Der Desorber wirkte dabei als Gas-Feststoff-Wärmetauscher, da die Wärme eines den Wärmetauscher beaufschlagenden Heißgases durch die Röhrenwandungen auf den durch die Röhren strömenden festen Koks übertragen wird. Da der Wärmeübergang durch die Wandungen der Röhren hindurch erfolgt, müssen die Temperaturen des Heißgases und der Rohrwandungen ganz wesentlich über der Desorptionstemperatur liegen. Da die Röhren den desorbierten aggressiven Gasen ausgesetzt sind, müssen bei den erforderlichen hohen Temperaturen hohe Anforderungen an das für den Röhrenabsorber verwendete Material zumindest in der Vorwärmzone des Desorbers gestellt werden. In einer an die Vorwärmzone anschließenden Hochtemperaturzone wird Reichgas durch eine freie Schüttung rezirkuliert, um den Aktivkoks auf die erforderliche Temperatur aufzuheizen.

Aus der Schüttung wird der Aktivkoks in Röhren eingeleitet und in diesen einer Abkühlung unterzogen, die durch indirekte Kühlung des in den Röhren fließenden Aktivkoks' mittels Luft erfolgt.

Es ist die Aufgabe der vorliegenden Erfindung, ein Verfahren anzugeben, bei dem bei Erwärmung des Adsorptionsmittels geringere Ansprüche an die in der Erwärmungszone zur Führung des Adsorptionsmittels verwendeten Materialien gestellt werden.

Diese Aufgabe wird dadurch gelöst, daß die Erwärmung durch Beaufschlagung der Adsorptionsmittelkörner mittels einer Strahlung erfolgt, die von den Körnern direkt absorbiert wird.

Als kohlenstoffhaltiges Adsorptionsmittel kommen vorzugsweise Anthrazit, Aktivkoks, Petrolkoks und/oder Aktivkohle in Frage.

Vorzugsweise wird eine solche Strahlung verwendet, die in wesentlichem Ausmaße von den Körnern des Adsorptionsmittels absorbiert wird. Daher kommt als Strahlung neben der IR-Strahlung vorzugsweise eine dielektrische Aufheizung durch Mikrowellen in Frage. Dabei kann die Förderung des Adsorptionsmaterials in einem für Mikrowellen durchlässigen Einschluß erfolgen oder das Material wird vorzugsweise direkt durch einen Hohlraumresonator gefördert, in den die Mikrowellenenergie eingespeist wird.

Insgesamt wird ein Erwärmungsbereich von 80-700° C in Betracht gezogen, wobei zur Adsorption von $SO_x$ ein Erwärmungsbereich von 450-700° C in Frage kommt, während zur Desorption von $NO_x$ eine Temperatur von 80-150° C ausreicht. Als kohlenstoffhaltiges Adsorptionsmittel kommen Anthrazit, Aktivkoks, Petrolkoks und/oder Aktivkohle in Frage, wobei Aktivkoks bevorzugt wird.

Vorzugsweise ist vorgesehen, daß aus dem mittels der Strahlung erwärmten Adsorptionsmittel mittels eines im Kreislauf geführten Inergasstroms, z.B. $N_2$, die desorbierten gasförmigen Schadstoffe ausgetrieben und aus diesem Kreislauf in angereicherter Form mit Inertgas abgezogen werden.

Weiterhin wird bevorzugt, daß der im Kreislauf geführte Inertgasstrom mit ausgetriebenen gasförmigen Schadstoffen zusätzlich erwärmt wird. Diese Erwärmung kann z.B. über einen Gas-Gaswärmetauscher erfolgen.

Aus der vorstehend genannten Literaturstelle ist es bekannt, daß die Adsorptionsmittel, aus denen die gasförmigen Schadstoffe ausgetrieben sind, gekühlt werden. Wie bereits erwähnt, erfolgt die Kühlung indirekt, indem die Adsorptionsmittel durch Röhren geführt werden. Bei der erfindungsgemäßen Verfahrensführung wird bevorzugt, daß das Adsorptionsmittel nach dem Austreiben der Schadstoffe mit Inertgas direkt gekühlt wird. Dies erhöht den Wirkungsgrad der Kühlung. Die durch die Kühlung abgezogene Wärme kann vorteilhaft zu anderen Zwecken verwendet werden.

Da sowohl bei der Eingabe des zu desorbierenden Absorptionsmittels als auch zur Kühlung Inertgas verwendet wird, ist es zweckmäßig, daß die Einströmungen von Inertgas in die Desorptionszone bzw. in die Kühlzone gegensinnig erfolgen, so daß das Inertgas in die Reichgasentnahmezone gegensinnig einströmen kann und in den Austreibkreislauf aufgenommen wird.

Zusammengefaßt kann gesagt werden, daß durch die Erwärmung eines Adsorptionsmittels in der Heiß-und Desorptionszone durch Strahlung, die zur Führung des Adsorptionsmittels in der Anlage verwendeten Materialien im Vergleich zu dem bekannten Stand der Technik entsprechend geringerwertig ausgewählt werden können.

Die Erfindung richtet sich auch auf eine Anlage zur Durchführung des erfindungsgemäßen Verfahrens. Wie beim Stand der Technik ist die Anlage mit einer Heizeinrichtung, mit einem darunter angeordneten Desorptionsgassammler und einem unter diesem angeordneten Kühler versehen.

Erfindungsgemäß ist vorgesehen, daß die Heizeinrichtung mindestens einen Strahler aufweist, dessen Strahlung von den Adsorptionsmittelkörnern adsorbiert wird. Hierbei ist es möglich, daß eine Vielzahl von Einzelstrahlern oder eine entsprechend größere Antenne vorgesehen ist. Vorzugsweise ist dabei der Strahler ein Mikrowellenstrahler.

Weiterhin wird bevorzugt, daß das Ende der Heizeinrichtung, über das beladenes Adsorptionsmittel zugeführt wird, und das untere Ende der Kühlzone, aus dem desorbiertes Adsorptionsmittel ausgetragen wird, mit Inertgas beaufschlagbar sind. Damit wird gewährleistet, daß ein Schlupf des Desorptionsgases aus dem Desorptionsgassammler Richtung des zugeführten beladenen Adsorptionsmittels und bei Abführung des entladenen Adsorptionsmittels nicht auftreten kann.

Weiterhin wird bevorzugt, daß dem Desorptionsgassammler und dem Kühler jeweils ein Kreislauf von Inertgas und Desorptionsgas bzw. Inertgas als Kühlgas zugeordnet sind.

Das erfindungsgemäße Verfahren und die Vorrichtung sollen nun anhand der beigefügten Figuren näher erläutert werden.

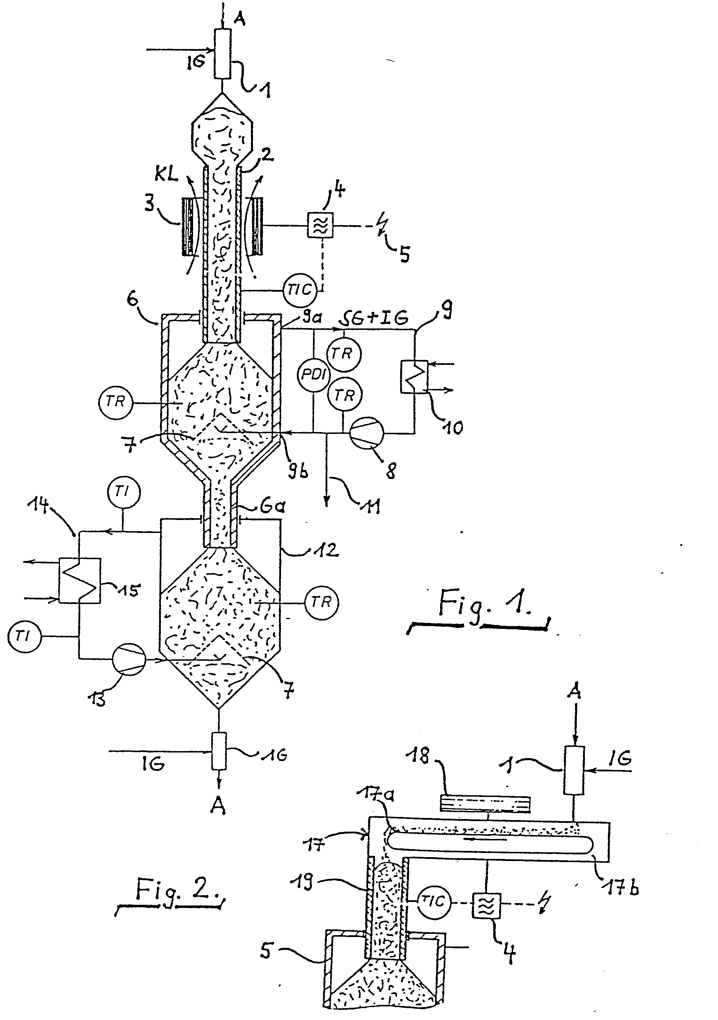

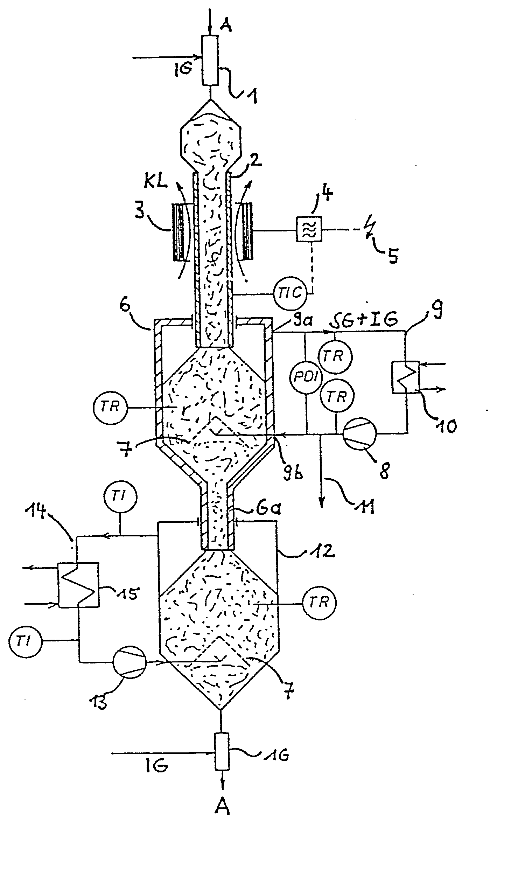

Es zeigt Figur 1 eine erste Ausführungsform der erfindungsgemäßen Anlage, bei der das Adorbpionsmittel durch ein Rohr geführt wird,

und Figur 2 eine Anlage, bei der das Adsorptionsmittel über eine Fördereinrichtung geführt wird.

Bei der Ausführungsform gemäß Figure 1 wird über ein Dosier-und Verschlußorgan 1 zu regenerierender und mit Schadstoffen beladener Aktivkoks A in die Regenerieranlage eindosiert und tritt in ein für Mikrowellen durchlässiges und gegen die desorbierten gasförmigen Schadstoffe widerstandsfähiges Rohr 2, z.B. aus Quarzglas, ein, das von einer ringartigen Mikrowellenantenne 3 mit Abstand umgeben ist. Ein Mikrowellensender 4, der mit einer Spannungsquelle 5 verbunden ist, speist die Antenne 3 derart, daß z.B. im Falle von im wesentlichen $SO_2$ als Schadstoff der Aktivkoks A auf eine Temperatur im Bereich von 450-700° C erwärmt wird. Zur Schonung der Ringantenne 3 ist ein Abstand zur Oberfläche des Rohres 2 vorgesehen, um den Durchtritt von freiströmender oder zwangsgeförderter Kühlluft KL zu ermöglichen.

Wie in die Figur 1 dargestellt, erfolgt eine Erfassung der Temperatur am Rohr 2 und eine Regelung der Ausgangsleistung des Senders 4 in Abhängigkeit von der Temperatur (TIC).

Der Aktivkoks A tritt aus dem unteren Ende des Rohres 2 in einen Desorptionsgassammler 6 ein und baut dort eine freie Schüttung über einem gelochten Kegelblech 7 auf.

Mittels eines Gebläses 8 und einer Leitung 9 wird aus dem Raum oberhalb der Schüttung des Aktivkokses A in dem Desorptionsgassammler 5 eine Mischung aus desorbierten Schadstoffgasen - im Falle einer Reinigung von Rauchgasen: $SO_2$, HF, HCl, $NO_x$ -und Inertgas IG abgezogen und unterhalb des Kegelblechs 7 wieder in die Schüttung eingeblasen. Das Einführen des Inertgases IG in die Anlage wird weiter unten erläutert.

Falls es erforderlich ist, wird in die Leitung 9 eine Anfahr-und/oder Stützheizung 10 eingeschaltet, z.B. ein Gas-Gas-oder ein Gas-Dampf-Wärmetauscher, um die Anfahrzeit der Anlage zu verkürzen bzw. in Einzelfällen die Erwärmung des Aktivkokses zu unterstützen.

Aus der Leitung 9 wird über eine Zweigleitung 11 ein mit den Schadgasen SG angereichertes Gas SG + IG abgezogen und in an sich bekannter Weise einer nicht gezeigten Reichgasaufarbeitung zugeführt, d.h. im Falle des Überwiegens von $SO_2$ einer Kontaktanlage zur Herstellung von $H_2SO_4$.

Wie aus der Figur 1 ersichtlich, werden die Temperaturen in der Leitung 9 vor Heizung 10 und auf der Druckseite des Gebläses 8 bzw. in der Schüttung im vorzugsweise ausgemauerten Desorbtionsgassammler 6 erfaßt und in der Meßwarte der Anlage registriert (TR). Desweiteren erfolgt eine Differenzdruckmessung zwischen Gasauslaß 9a und Gaseinlaß 9b der Leitung 9 - (PDI).

Der im wesentlichen vom Desorptionsgas befreite Aktivkoks A tritt über einen Austrittsstutzen 6a in einen unterhalb des Sammlers 6 angeordneten Kühler 12 ein, der ebenfalls mit einem gelochten Kegelblech 7 versehen ist. Mittels eines Gebläses 13 und einer Leitung 14 wird Kühlgas im Gegenstrom durch die Schüttung des Kühlers 12 geführt. In der Leitung 14 ist zur Kühlung des Kühlgases ein Wärmetauscher 15, z.B. ein Gas-Wasser-Wärmetauscher angeordnet. Hier wird die Temperatur in der Schüttung erfaßt und registriert - (TR) und die Temperatur vor und hinter Wärmetauscher 15 in der Leitung 14 gemessen (TI).

Aus dem Kühler 12 wird der Aktivkoks A über ein Dosier-und Verschlußorgan 16 abgezogen.

Über die Verschlußorgane 1 und 16 wird in Inertgas IG, z.B. N₂, in die Anlage eingeführt. Es ist z.B. möglich, daß das Dosier-und Verschlußorgan von zwei hintereinander angeordneten Zellenradschleusen ausgebildet wird und das Inertgas zwischen den beiden Schleusen eingeführt wird. Von den Verschlußorganen her strömt das Inertgas gegensinnig in die Anlage 1 und dient insbesondere als Kühlgas im Kühler 12 und als Kreislaufgas für den Desorptionsgassammler 6. Entsprechend dem Zustrom an Inertgas und der desorbierten Gasmenge wird ein Teil des Inertgases fortlaufend über Leitung 11 abgezogen.

Der Kühler muß nicht ausgemauert sein oder auf ähnliche Weise gegen die Schadgase gesichert sein, da der Schlupf von Schadgas aus dem Desorbtionsgassammler 6 in den Kühler 12 durch den Aktivkoks in dem Ansatz 6a und durch die gegensinnige Inertgasströmung außerordentlich vermieden bzw. gering gehalten wird.

Anstelle des Rohres 2 kann entsprechend der Fördermenge und/oder der erreichbaren Eindringtiefe der Mikrowellen in den Aktivkoks eine Vielzahl von z.B. in Reihen angeordneten Röhren vorgesehen sein, die mit Aktivkoks beschickt werden und in den Desorbtionsgassammler 6 einmünden.

Die mit dem Inertgas IG aus dem Kühler 12 und über den Wärmetauscher 15 abgeführte Wärme kann vielfältig genutzt werden.

Während bei der Ausführungsform gemäß Figur 1 eine Erwärmung eines sich durch ein oder mehrere Rohre bewegenden Aktivkoksstromes erfolgt, ist bei der Ausführungsform gemäß Figur 2 dem Dosier-und Verschlußorgan 1 als Heiz-und Desorbtionszone ein Fördereinrichtung 17 mit einem Förderelement 17a und einem das Förderelement gasdicht umgebenden Gehäuse 17b nachgeschaltet, die den Koks in einer Schüttung unter einer länglichen Mikrowellenantenne 18 hindurchführt, z.B. ein Transportband, auf dem sich der Aktivkoks in flacher Schüttung bewegt. Der erwärmte Koks fällt über einen Fallschacht 19 in den Desorbtionsgassammler 5. Als Beispiel für andere Fördereinrichtungen werden Schneckenförderer und Vibratorrinnen genannt. Auch bei den Fördereinrichtungen aufweisenden Ausführungsformen können wie bei dem Rohr mehrere Fördereinrichtungen mit zugeordneten Mikrowellenantennen bzw. -strahlern vorgesehen sein.

Die Förderung durch das Rohr 2 oder die Fördereinrichtung 17 kann sowohl kontinuierlich - wie in den Ausführungsbeispielen gezeigt -als auch diskontinuierlich erfolgen. Die Zufuhr und Abfuhr wird in beiden Fällen durch entsprechend angesteuerte Dosier-und Verschlußorgane 1 und 16 erreicht. Andere als die gezeigten Mikrowellenantennenformen sind möglich z.B. kann das Gehäuse 17b als Mikrowellenhohlleiter ausgebildet sein, in den von einem Mikrowellensender Mikrowellen eingekoppelt werden.

**Ansprüche**

1. Verfahren zur Desorption eines mit Schadstoffen beladenen körnigen kohlenstoffhaltigen Adsorptionsmittels, insbesondere mit Schwefeloxiden und/oder Stickstoffoxiden aus Rauchgasen beladenen Aktivkokses, durch Erwärmung des Adsorptionsmittels auf Desorptionstemperatur, Sammeln der desorbierten gasförmigen Schadstoffe und anschließendem Kühlen, dadurch gekennzeichnet,

daß die Erwärmung durch Beaufschlagung der Adsorptionsmittelkörner mittels einer Strahlung erfolgt, die von den Körnern direkt absorbiert wird.

2. Verfahren nach Anspruch 1, dadurch gekennzeichnet,

daß das beladene Absorptionsmittel mit Mikrowellen erwärmt wird.

Verfahren nach Anspruch 1 oder 2, dadurch gekennzeichnet,

daß aus dem mittels der Strahlung erwärmten Adsorptionsmittel mittels eines im Kreislauf geführten Inertgas stroms, z.B. N₂, die desorbierten gasförmigen Schadstoffe ausgetrieben und aus diesem Kreislauf in angereicherter Form mit Inertgas abgezogen werden.

4. Verfahren nach einem der Ansprüche 1-3, dadurch gekennzeichnet,

daß der im Kreislauf geführte Inertgasstrom mit ausgetriebenen gasförmigen Schadstoffen zusätzlich erwärmt wird.

5. Verfahren nach einem der Ansprüche 1-4, dadurch gekennzeichnet,

daß das Adsorptionsmittel nach dem Austreiben der Schadstoffe mit Inertgas direkt gekühlt wird.

6. Verfahren nach einem der Ansprüche 1-5, dadurch gekennzeichnet,

daß die Einströmungen von Inertgas in die Desorptionszone bzw. in die Kühlzone gegensinnig erfolgen.

7. Anlage zur Durchführung des Verahrens nach einem der Ansprüche 1-6 mit einer Heizeinrichtung mit einem darunter angeordneten Desorptionsgassammler und einem unter diesem angeordneten Kühler, dadurch gekennzeichnet,

daß die Heizeinrichtung mindestens einen Strahler (2; 18) aufweist, dessen Strahlung von den Absorptionsmittelkörnern absorbiert wird.

Anlage nach Anspruch 7, dadurch gekennzeichnet,

daß der Strahler ein Mikrowellenstrahler (4, 3; 4, 18) ist.

9. Anlage nach Anspruch 7 oder 8, dadurch gekennzeichnet,

daß das Ende (1) der Heizeinrichtung (3; 18), über das beladene Absorptionsmittel zugeführt wird, und das untere Ende (16) der Kühlzone (12), aus dem desorbiertes Absorptionsmittel (A) ausgetragen wird, mit Inertgas (IG) beaufschlagbar sind.

10. Anlage nach einem der Ansprüche 7-9, dadurch gekennzeichnet,

daß dem Desorptionsgassammler (6) und dem Kühler (12) jeweils ein Kreislauf (9, 8; 13, 14) von Inertgas und Desorptionsgas (IG + FG) bzw. Inertgas (IG) als Kühlgas zugeordnet sind.

_Fig. 1._

_Fig. 2._